# EUROPEAN PATENT SPECIFICATION

(11) **EP 1 479 936 B1**
(45) Date of publication and mention of the grant of the patent: **01.08.2012**
(21) Application number: 02701639.3
(22) Date of filing: 28.02.2002
(51) Int. Cl.: F16D 48/06, F16H 1/28, H02P 15/00

(54) **CONTROLLER OF ELECTROMAGNETIC CLUTCH**
STEUERUNG FÜR ELEKTROMAGNETISCHE KUPPLUNG
DISPOSITIF DE COMMANDE D'EMBRAYAGE ELECTROMAGNETIQUE

(43) Date of publication of application: 24.11.2004
(73) Proprietor: MITSUBISHI DENKI KABUSHIKI KAISHA, Chiyoda-ku Tokyo 100-8310 (JP)
(72) Inventor: KITAMURA, Yutaka,c/o Mitsubishi Denki Kabushiki Ka, Chiyoda-ku, Tokyo 100-8310 (JP); NISHIMURA, Youji,c/o Mitsubishi Denki Kabushiki Ka, Chiyoda-ku, Tokyo 100-8310 (JP); KOMURASAKI, Keiichi,c/o Mitsubishi Denki Kabushiki, Chiyoda-ku, Tokyo 100-8310 (JP)
(74) Representative: HOFFMANN EITLE
(86) International application number: PCT/JP2002/001862
(87) International publication number: WO 2003/072970

(56) References cited:
- JP-A- 56 086 518
- JP-A- 57 060 917
- JP-A- 63 293 345
- JP-U- 58 092 528
- JP-U- 63 123 834
- JP-U- 64 053 466
- US-A- 4 514 666
- US-A- 4 567 975
- US-A- 4 649 458
- US-A- 5 492 194

## Description

### TECHNIAL FIELD

The present invention relates to an electromagnetic clutch for a rotating electric machine of a motor vehicle. More particularly, the present invention is concerned with the control apparatus for controlling the electromagnetic clutch so as to suppress generation of harsh or loud collision noise.

### BACKGROUND TECHNIQUE

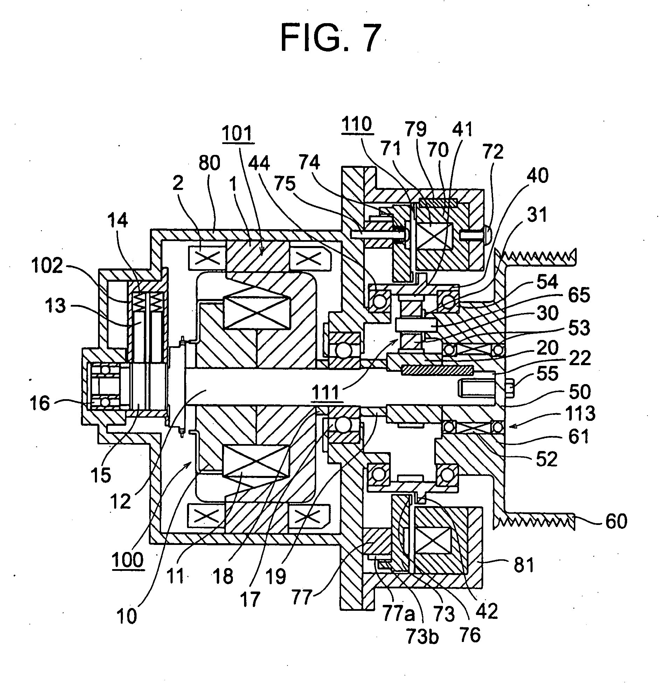

Figure 7 is a sectional view of a conventional rotating electric machine for a motor vehicle (hereinafter referred to simply as the rotating electric machine) known heretofore. The rotating electric machine is comprised of a first bracket 80, a rotor 100 of landaulet type fixedly mounted on a rotor shaft 12 disposed internally of the first bracket 80, a stator 101 secured to the inner wall surface of the first bracket 80, slip rings 15 secured to the rotor shaft 12 at an end portion thereof for supplying an electric current to the rotor 100, a pair of brushes 13 which are in slideable contract with the surfaces of the slip rings 15, and a brush holder 102 housing therein the brushes 13 and springs 14 pressing the brushes 13, respectively.

The rotor 100 is composed of a field winding 11 for generating magnetic flux under the effect of the electric current flowing through the field winding, and a rotor core 10 encasing the field winding 11 therein. The stator 101 is composed of a stator core 1 formed by laminating or stacking a plurality of steel sheets through which the magnetic flux generated by the field winding 11 passes, and a three-phase stator winding 2 through which a three-phase alternating current flows.

Further, the rotating electric machine is equipped with an electromagnetic clutch 110 disposed internally of a second bracket 81, a planetary gear mechanism 111, a pulley 60 and a one-way clutch 113.

The electromagnetic clutch 110 mentioned above is composed of an electromagnetic clutch body 70 fixedly secured to the second bracket 81 by means of a locking screw 72 and a fixing key 79, a field coil 71 disposed internally in the electromagnetic clutch body 70, an electromagnetic clutch follower member 73 secured to the first bracket 80 by means of a locking screw 75 through an interposed hold member 77 in opposition to the electromagnetic clutch body 70 and having an engaging portion 76 formed along a diametrically inner peripheral portion, and a spring 74 disposed between the electromagnetic clutch follower member 73and a head of the locking screw 75 for resiliently urging the electromagnetic clutch follower member 73 toward the electromagnetic clutch body 70.

Formed in the outer peripheral surface of the hold member 77 is a guide face 77a in which a guide face 73b formed in the inner peripheral surface of the electromagnetic clutch follower member 73 engages slideably in the axial direction. In this manner, the electromagnetic clutch follower member 73 is assembled together with the hold member 77. Incidentally, although the hold member 77 is shown as being formed as a discrete member separated from the first bracket 80, the former may be formed integrally with the latter.

The planetary gear mechanism 111 mentioned previously is composed of a sun gear 20, a cylindrical member 40 including an engaging portion 42 formed at an end face and adapted to engage with the engaging portion 76 of the electromagnetic clutch body 70 and an internal gear 41 formed in the inner wall surface, bearings 44 disposed between an inner end surface of the cylindrical member 40 and an end portion of the first bracket 80, a planetary gear 30 meshing with the internal gear 41 and the sun gear 20, respectively, a carrier 61 which supports rotatably the planetary gear 30 through the medium of a planetary gear shaft 65 extending through a center portion of the planetary gear 30 and which is formed integrally with the pulley 60, and a bearing 54 disposed between the carrier 61 and the cylindrical member 40 at respective end portions.

The one-way clutch 113 mentioned previously includes a cam portion 52 provided on the inner side of the carrier 61, bearings 53 provided on both sides of the cam portion, and a cam follower member 50 fixedly secured together with the sun gear 20 to the rotor shaft 12 at respective end portions by means of a fixing key 22.

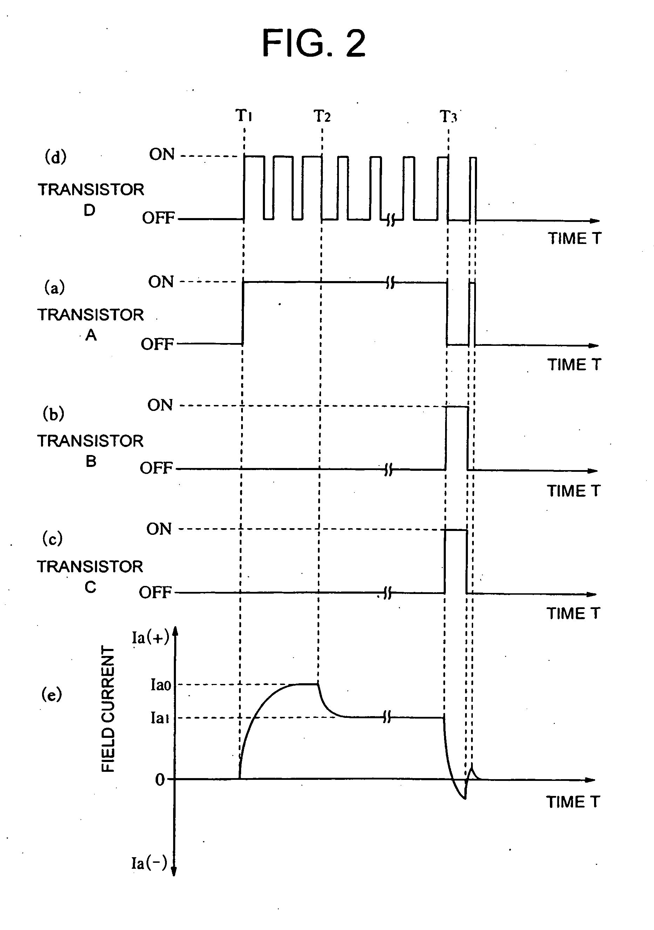

Further, in Fig. 2, reference numerals 16 and 17 denote bearings, respectively, 18 and 19 denote spacers, respectively, and 55 denotes a clamping bolt.

Next, description will be made of operation of the rotating electric machine implemented in the structure described above.

Firstly, operation of the rotating electric machine in the motor mode will be described.

Upon starting of an engine, the field coil 71 of the electromagnetic clutch 110 is electrically energized, as a result of which the electromagnetic clutch follower member 73 is forced to bear onto the electromagnetic clutch body 70 against the elastic force of the spring 74. Thus, the engaging portion 76 of the electromagnetic clutch follower member 73 is caused to engage with the engaging portion 42 of the cylindrical member 40.

As a result of this, the internal gear 41 of the cylindrical member 40 operates as a stationary element, whereby deceleration at the reduction gear ratio of the planetary gear mechanism 111 is realized in the state where the turning force or torque of the rotor 100 is transmitted to the sun gear 20 which is thus caused to rotate about it's own axis with the planetary gear 30 revolving around the sun gear 20 while rotating about the planetary gear shaft 65.

In accompaniment with the revolution of the planetary gear 30, the pulley 60 formed integrally with the carrier 61 serving as the output element is caused to rotate, as a result of which turning force or torque is transmitted to the engine through the medium of a belt (not shown) wound around the pulley 60 for starting the engine operation. In this state, the one-way clutch 113 operates idly. Consequently, the engine is driven at a speed corresponding to a product of multiplication of the rotation speed of the rotor 100 by the reduction gear ratios of the planetary gear mechanism 111 and the pulley 60, respectively.

Incidentally, the turning force or torque of the rotor 100 is generated by supplying a three-phase alternating current to the three-phase stator winding 2 in the state where an exciting current is fed to the field winding 11 from a battery (not shown) through the brush 13 and the slip ring 15 and thus the magnetic flux is generated through the rotor core 10.

Next, description will be directed to operation of the rotating electric machine in the generator mode.

When the electric power is fed from the rotating electric machine operating in the generator mode, the electromagnetic clutch follower member 73 is detached from the electromagnetic clutch body 70 under the elastic force of the spring 74, whereby the engaging portion 76 of the electromagnetic clutch follower member 73 and the engaging portion 42 of the cylindrical member 40 are disengaged from each other, rendering the cylindrical member 40 to be rotatable. In this state, the motive power of the engine is transmitted to the carrier 61 serving as the input element by way of the pulley 60. Since the one-way clutch 113 is coupled in this state, the rotor 100 is caused to rotate in unison with the carrier 61 through the rotor shaft 12, whereby an electromotive force is induced in the three-phase stator winding 2.

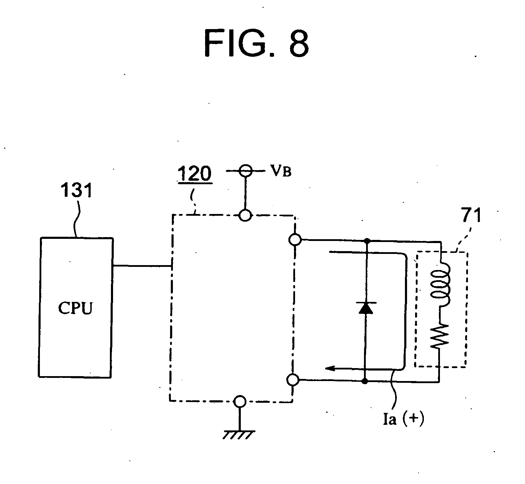

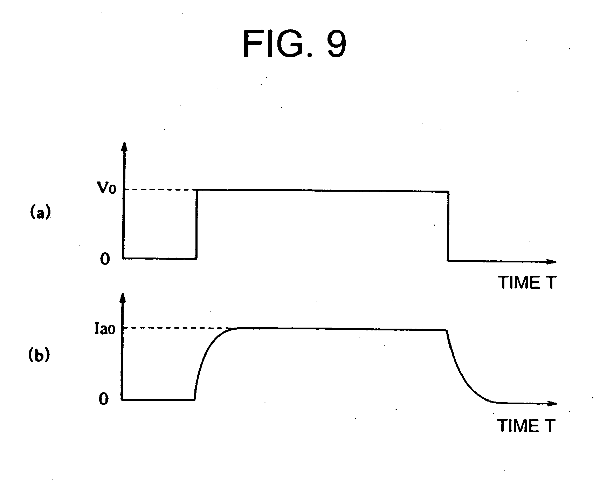

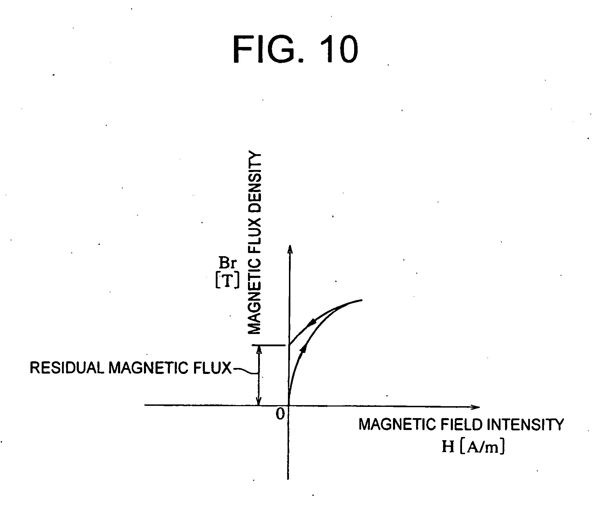

Figure 8 is a circuit diagram showing a field current control circuit 120 for the electromagnetic clutch 110 known heretofore. Further, Fig. 9 is a timing chart for illustrating the field current control, wherein a voltage making appearance across the field coil upon the field current control is shown at (a) with the direction and magnitude of the field current being shown at (b). Figure 10 is a view for illustrating a relation between the magnetic field intensity and the magnetic flux density due to the field current mentioned above.

According to the method of controlling the electromagnetic clutch for the rotating electric machine of the structure described above, the field current Ia(+) flowing through the field coil 71 is simply turned on and off, as shown in Fig. 9 at (a) and (b). Consequently, in the operation of the electromagnetic clutch upon starting of the engine operation, the electromagnetic clutch follower member 73 is attracted to the electromagnetic clutch body 70 to engage therewith with one rush. Thus, there arises a problem that harsh or loud coupling noise is generated upon coupling of the electromagnetic clutch.

Further, for changing over to the generator operation mode, electric energization of the field coil 71 is simply interrupted. As a consequence, residual magnetic flux continues to exist in the magnetic circuit of the electromagnetic clutch, as can be seen from Fig. 10. For this reason, there arises such situation that the electromagnetic clutch follower member 73 can not disengage completely from the electromagnetic clutch body 70 or the electromagnetic clutch follower member 73 tends to remain partially sticking to the electromagnetic clutch body 70 with inclination, as a result of which the engaging portion 42 of the cylindrical member 40 caused to rotate by way of the pulley 60, the carrier 61, the planetary gear shaft 65, the planetary gear 30, the internal gear 41 and the cylindrical member 40 strikes against the engaging portion 76 of the electromagnetic clutch follower member 73, to thereby generate loud collision noise, giving rise to a problem.

US 5,492,194 discloses an on demand four-wheel drive system comprising a microcontroller and a modulating electromagnetic clutch assembly controlled by the microcontroller. The clutch current is incrementally increased or decreased to increase or decrease torque transfer between a primary output shaft and a secondary output shaft.

The present invention has been made with a view to solving the problems such as mentioned above, and thus an object of the present invention is to provide a control apparatus for the electromagnetic clutch which apparatus is capable of solving the problem that the electromagnetic clutch follower member can not be detached from the electromagnetic clutch body or the former tends to remain partially sticking to the latter under the influence of the residual magnetic flux, as a result of which the electromagnetic clutch follower member is inclined to strike against the electromagnetic clutch body, whereby loud or harsh collision noise is generated.

### DISCLOSURE OF THE INVENTION

The present invention provides an electromagnetic clutch according to claim 1

The field coil of the electromagnetic clutch is constituted by a plurality of field coils, wherein a field current of a same direction is caused to flow through any one of the plurality of field coils while the other field coil is supplied with the field current alternately in one direction and in the other direction opposite to the one direction.

Further, a pulse-width modulating circuit may be employed as the excitation attenuating means.

Moreover, first and second Zener diodes may be connected across the field coil of the electromagnetic clutch in parallel with the field coil with the first and second Zener diodes being connected in series with polarities opposite to each other.

Furthermore, the excitation attenuating means may be so arranged as to decrease the field current to a prescribed current or alternatively diminish the excitation intensity to a prescribed value in the course of elapse of a predetermined time after an electromagnetic clutchfollower member and an electromagnetic clutch body of the electromagnetic clutch have been coupled to each other.

Furthermore, the electromagnetic clutch may be implemented in combination with a rotating electric machine for a motor vehicle and capable of transmitting bidirectionally a motive power between an engine of the motor vehicle and the rotating electric machine through the medium of a power transmission mechanism, the rotating electric machine operating as an electric motor for starting engine operation and as an electric generator for supplying an electric power to the motor vehicle. The electromagnetic clutch may be implemented in combination with a rotor secured to a rotor shaft disposed internally of a bracket, a planetary gear mechanism including a sun gear secured to the rotor shaft at an end portion thereof, a planetary gear meshing with the sun gear, a cylindrical member having an internal gear formed in an inner wall surface thereof and meshing with the planetary gear and a carrier for supporting rotatably the planetary gear by means of a planetary gear shaft extending axially through the planetary gear at a center portion thereof, and a one-way clutch disposed on an inner side of the carrier for transmitting a turning force from the power transmission mechanism to the rotor shaft by way of the sun gear. The electromagnetic clutch is comprised of an electromagnetic clutch body secured to the bracket and an electromagnetic clutch follower member disposed in opposition to the electromagnetic clutch body movably to and away from the electromagnetic clutch. The electromagnetic clotch is as set forth in claims 1. In the electric motor operation mode, the electromagnetic clutch follower member is brought into contact with the electromagnetic clutch body and engages the cylindrical member to thereby brake the cylindrical member, as a result of which the internal gear acts as a stationary element such that the turning force of the rotor is transmitted to the power transmission mechanism by way of the rotor shaft, the sun gear, the planetary gear and the carrier, while in the generator operation mode, the electromagnetic clutch follower member is moved away from the electromagnetic clutch body, as a result of which the turning force from the power transmission mechanism causes the carrier, the one-way clutch, the sun gear and the rotor shaft to rotate to thereby rotate the rotor.

### BRIEF DESCRIPTION OF THE DRAWINGS

Figure 1 is a circuit diagram showing a control circuit for controlling a field current flowing through a field coil of an electromagnetic clutch not according the present invention.
Figure 2 is a view for illustrating on/off states of transistors A, B, C and D of the field current control circuit in a timing chart together with corresponding changes in direction and magnitude of the field current Ia.
Figure 3 is a view for illustrating a relation between magnetic field intensity and magnetic flux density in a magnetic circuit of the electromagnetic clutch when the field current Ia flows therethrough.
Figure 4 is a circuit diagram showing a control circuit for controlling a field current flowing through the field coil of the electromagnetic clutch according to the present invention.
Figure 5 is a view for illustrating on/off states of transistors A, B, C and D of the field current control circuit in a timing chart together with corresponding changes in the direction and magnitude of the field currents Ia and Ib and the magnetic field intensity.
Figure 6 is a view for illustrating a relation between the magnetic field intensity and the magnetic flux density in a magnetic circuit of the electromagnetic clutch when the field current Ia and the field current Ib are electrically energized.
Figure 7 is a sectional view of a conventional rotating electric machine for a motor vehicle.
Figure 8 is a circuit diagram showing a field current control circuit for the electromagnetic clutch known heretofore.
Figure 9 is a timing chart for illustrating the field current control, wherein a voltage making appearance across a field coil upon field current control is shown at (a) while direction and magnitude of the field current at that time are shown at (b).
Figure 10 is a view for illustrating a relation between the magnetic field intensity and the magnetic flux density due to the field current.

### BEST MODES FOR CARRYING OUT THE INVENTION

### Example 1

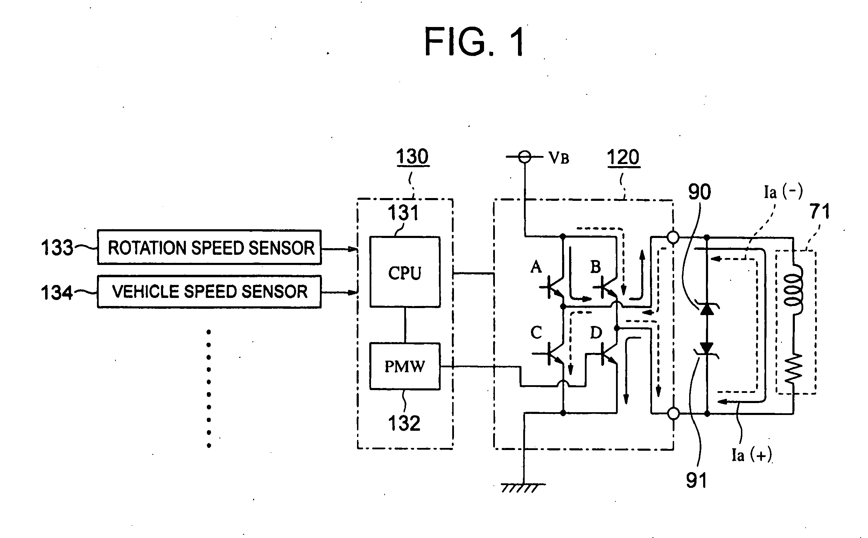

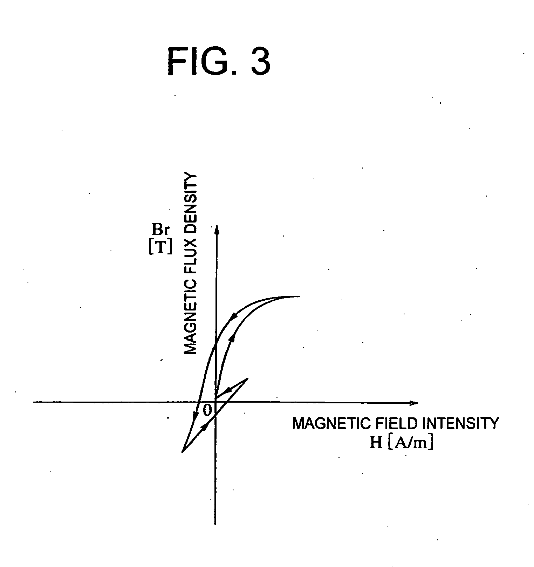

Figure 1 is a circuit diagram showing a field current control circuit 120 for a field coil of an electromagnetic clutch not according to the present invention. Figure 2 is a view for illustrating on/off states of transistors A, B, C and D of the field current control circuit 120 in a timing chart together with corresponding changes in the direction and magnitude of the field current Ia. Figure 3 is a view for illustrating a relation between the magnetic field intensity of a magnetic circuit of the electromagnetic clutch and magnetic flux density when the above-mentioned field current Ia flows.

Referring to Fig. 1, the field current control circuit for the field coil of the electromagnetic clutch includes the field coil 71, the field current control circuit 120, an electromagnetic , clutch controlling microcomputer 130, a CPU (Central Processing Unit) 131 and a pulse-width modulating circuit (PWM) 132 incorporated in the electromagnetic clutch controlling microcomputer, a rotation speed sensor 133 for obtaining a signal required for controlling the electromagnetic clutch, a vehicle speed sensor 134 etc., wherein the above-mentioned field current control circuit 120 includes transistors A, B, C and D with the pulse-width modulating circuit (PWM) 132 being connected to only the transistor D.

At this juncture, it should be mentioned that the field current control circuit 120 and the electromagnetic clutch controlling microcomputer 130 cooperate to constitute an excitation attenuating means for decreasing gradually the intensity of excitation of the field coil 71 while changing over alternately the direction of the excitation between positive (plus) and negative (minus) polarities.

Connected across the field coil 71 in parallel therewith are first and second Zener diodes 90 and 91 which are connected in series to each other with opposite polarities. Collectors of the transistors A and B are connected to a terminal of positive or plus polarity of a direct-current power supply source VB of output voltage VB while emitters of the transistors C and D are connected to the ground potential. Next, description will be directed to the control operation performed by the field current control circuit of the structure described above. According to the teaching of the invention incarnated in the instant embodiment, the electromagnetic clutch is set to the engaging state (coupled state) by feeding to the field coil 71 shown in Fig. 1 a field current Ia(+) flowing in the direction indicated by solid-line arrows in Fig. 1, while it assumes a disengaged state (uncoupled state) upon interruption of the field current Ia(+).

The electromagnetic clutch controlling microcomputer 130 is so designed or programmed as to determine magnitude and direction of the field current fed to the field coil 71 on the basis of the output signals of the rotation speed sensor 133, the vehicle speed sensor 134 and others and control the timings or time points at which the transistors A, B and C of the field current control circuit 120 are turned on/off as well as on/off durations and the duty ratio of the pulse-width modulated output signal of the pulse-width modulating circuit (PWM) 132 connected to the transistor D.

Firstly, when the electromagnetic clutch 110 is to be set to the engaging (coupled) state, the transistor D undergoes the duty control such as illustrated in Fig. 2 at (d) in response to the pulse-width modulated output signal outputted from the pulse-width modulating circuit (PWM) 132 of the electromagnetic clutch controlling microcomputer 130 during a time period from the time point T1 to the time point T2 shown in Fig. 2. During this time period, the transistor A is in the on-state (see Fig. 2 at (a)), whereas the transistors B and C are both in the off-state (see Fig. 2 at (b) and (c)).

In this case, the field current Ia(+) increases gradually from the time point T1 to T2, as a result of which the electromagnetic clutch follower member 73 is attracted progressively to the electromagnetic clutch body 70. In other words, the collision or striking speed of the electromagnetic clutch follower member 73 against the electromagnetic clutch body 70 is made slow and thus the clutch coupling noise is reduced.

After the coupling of the electromagnetic clutch, the field current may be of lesser magnitude because the air gap in the magnetic circuit of the electromagnetic clutch approaches to zero. Accordingly, the duty ratio of the pulse-width modulated output signal outputted from the pulse-width modulating circuit (PWM) 132 is decreased. In that case, the field current converges to a value Ia1, as shown in Fig. 2 at (e) (during a time period from the time point T2 to T3 shown in Fig. 2 at (d)).

When the electromagnetic clutch 110 is to be disengaged (set to the uncoupled state), the transistors A and D are turned off while the transistors B and C are turned on at a time point T3 shown in Fig. 2 to thereby supply to a field coil the field current Ia(-) of the reverse direction (direction indicated by broken-line arrows in Fig. 1).

In succession, by turning on the transistors A and D with the duty being decreased while turning off the transistors B and C, the residual magnetic flux can be made close to zero, as can be seen from the relation between the magnetic field intensity and the magnetic flux density illustrated in Fig. 3. By virtue of this feature, such situation can be avoided in which the electromagnetic clutch follower member 73 is not detached from the electromagnetic clutch body 70 or the former becomes partially difficult to separate from the latter, as a result of which generation of collision noise can be prevented.

By the way, the counter electromotive force induced in the field coil upon turning on/off of the field current flowing through the field coil 71 in the control operation described above is released or discharged through the circuit extending from the Zener diode 90 to the field coil 71 via the Zener diode 91 or the circuit extending from the Zener diode 91 to the field coil 71 via the Zener diode 90.

### Embodiment

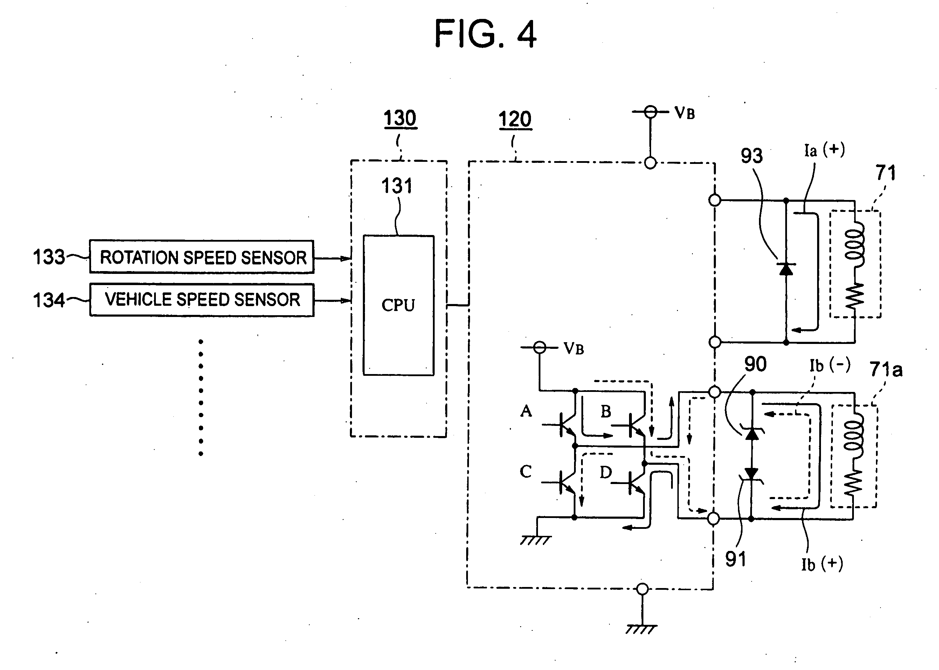

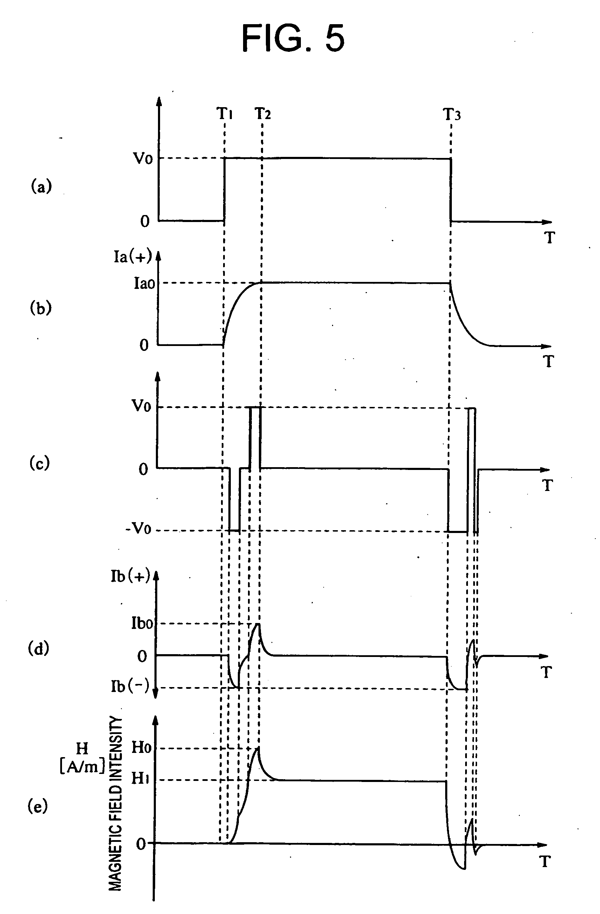

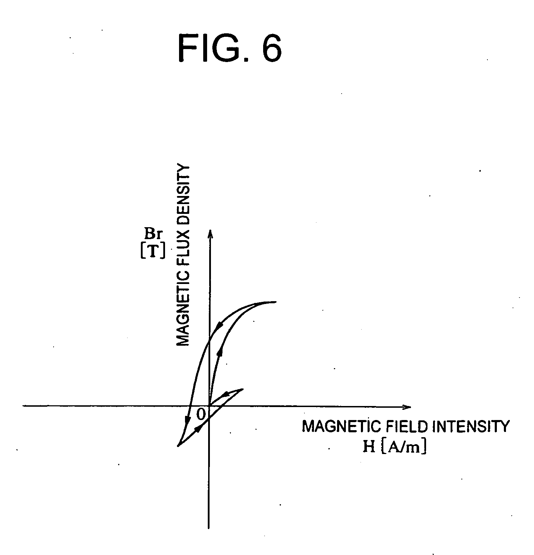

Figure 4 is a circuit diagram showing the field current control circuit for the field coil of the electromagnetic clutch according to an exemplary embodiment of the present invention. As is shown in Fig. 4, the field coil is constituted by a field coil 71 and a second field coil 71a according to the instant embodiment of the invention. Figure 5 is a view for illustrating on/off states of the transistors A, B, C and D of the field current control circuit 120 in a timing chart together with corresponding changes in the direction and magnitude of the field currents Ia and Ib and the magnetic field intensity. Figure 6 is a view for illustrating a relation between the magnetic field intensity and the magnetic flux density in a magnetic circuit of the electromagnetic clutch when the above-mentioned field currents Ia and Ib are caused to flow.

Referring to Fig. 4, the field current control circuit for the field coils of the electromagnetic clutch includes the first and the second field coils 71 and 71a, the field current control circuit 120, an electromagnetic clutch controlling microcomputer 130, a CPU (Central Processing Unit) 131 incorporated in the electromagnetic clutch controlling microcomputer and a rotation speed sensor 133 for obtaining the signal required for controlling the electromagnetic clutch, a vehicle speed sensor 134 etc., wherein the above-mentioned field current control circuit 120 includes transistors A, B, C and D.

At this juncture, it should be mentioned that the field current control circuit 120 and the electromagnetic clutch controlling microcomputer 130 cooperate to constitute an excitation attenuating means for applying alternately the voltages of positive and negative polarities to the field coil 71a of the electromagnetic clutch.

Connected across the first field coil 71 is a diode 93 for absorbing surge voltage, while connected across the field coil 71a in parallel therewith are first and second Zener diodes 90 and 91 which are connected in series to each other with opposite polarities.

Collectors of the transistors A and B are connected to a terminal of positive or plus polarity of the direct-current power supply source VB of the output voltage VB while emitters of the transistors C and D are connected to the ground potential.

Next, description will turn to the control operation performed by the field current control circuit 120 of the structure described above.

According to the teaching of the invention incarnated in the instant embodiment, the electromagnetic clutch is set to the engaging state (coupled state) by supplying to the first field coil 71 the field current Ia(+) in the direction indicated by a solid-line arrow in Fig. 4 and feeding to the second field coil 71a the field current Ib(+) in the direction indicated by solid-line arrows, while the electromagnetic clutch assumes the disengaged state (uncoupled state) upon interruption of the above-mentioned field currents Ia(+) and Ib(+).

The electromagnetic clutch controlling microcomputer 130 is so designed or programmed as to determine the magnitude and direction of the field currents fed to the first field coil 71 and the second field coil 71a on the basis of the output signals of the rotation speed sensor 133, the vehicle speed sensor 134 and others and control the on/off timings of electrical energization of the first field coil 71 and the on/off timings of the transistors A, B, C and D for the electrical energization of the second field coil 71a as well as the on/off time duration.

Firstly, when the electromagnetic clutch 110 is to be set to the engaging state (coupled state), the first field coil 71 is electrically energized, being supplied with a prescribed field current Iao (see Fig. 5(b)) during a time period from the time point T1 to T2 shown in Fig. 5, while the second field coil 71a is supplied alternately with the field currents Ib(+) and Ib(-) with the transistors A and B on one hand and the transistors B and C on the other hand being so controlled as to be alternately on and off on a per pair basis. In this case, the magnetic field intensity in the magnetic circuit of the electromagnetic clutch 110 is approximately such as illustrated in Fig. 5 at (e). As can be seen in the figure, excitation is intensified gradually, as a result of which the electromagnetic clutch follower member 73 is attracted only gradually toward the electromagnetic clutch body 70, which means that the speed at which the electromagnetic clutch follower member 73 strikes against the electromagnetic clutch body 70 is reduced. Thus, the coupling noise of the electromagnetic clutch can be reduced.

After the electromagnetic clutch having been coupled, the air gap in the magnetic circuit of the electromagnetic clutch approaches to zero. Accordingly, the excitation intensity may be decreased. Thus, the transistors A, B, C and D are all turned off, whereby the electrical energization of the second field coil 71a is stopped.

When the electromagnetic clutch 110 is to be disengaged (set to the uncoupled state), supply of the current Ia(+) to the first field coil 71 is interrupted at the time point T3 shown in Fig. 5 and at the same time the transistors A and D are turned off with the transistors B and C being turned off, which results in that the field current flows through the second field coil 71a as indicated by the broken-line arrow Ib(-) in Fig. 4. In succession, the transistors A and D are turned on with the transistors B and C being off, whereby the field current indicated by the solid-line arrow Ib(+) is caused to flow through the second field coil 71a, which is then followed by the turn-off of the transistors A and C and the turn-on of the transistors B and C, which results in that the field current Ib(-) flows through the second field coil 71a. Incidentally, the time period during which the field currents flow is so set as to decrease gradually (see Fig. 5 at (c) and (d)).

As is apparent from the above, owing to such control that the direction of the field current of the second field coil 71a is alternately changed and that the magnitude of the current is gradually diminished, the residual magnetic flux can be made approximately zero, as can be seen from the relation between the magnetic field intensity and the magnetic flux density in the magnetic circuit of the electromagnetic clutch illustrated in Fig. 6.

Thus, such situation in which the electromagnetic clutch follower member 73 can not detach from the electromagnetic clutch body 70 or the former is partially difficult to separate from the latter can be avoided. As a result of this, generation of the collision noise can be suppressed.

### INDUSTRIAL APPLICABILITY

The present invention has provided the control apparatus for controlling the electromagnetic clutch designed to change over the power transmission mechanism between the coupled state and the uncoupled state for thereby enabling and disabling transmission of the motive power between the engine and the rotating electric machine through the medium of the power transmission mechanism, wherein the control apparatus includes the excitation attenuating means for decreasing gradually the intensity of excitation of the field coil of the electromagnetic clutch while switching the direction of the excitation alternately from one to the other opposite direction, when the coupled state is changed over to the uncoupled state. By virtue of the arrangement that the excitation intensity of the field coil of the electromagnetic clutch is gradually decreased with the excitation being switched alternately from one to the other opposite direction upon changing over of the power transmission mechanism from the coupled state to the uncoupled state, the curve representing demagnetization in the field core portions of the electromagnetic clutch body and the electromagnetic clutch follower member is substantially such as illustrated in Fig. 3 or Fig. 6. It can be seen that the residual magnetic flux approaches to zero. Thus, it is possible to solve the problem that the electromagnetic clutch follower member remains contacted to the electromagnetic clutch body or the electromagnetic clutch follower member becomes difficult to detach completely from the electromagnetic clutch body with the electromagnetic clutch follower member being inclined to strike against the electromagnetic clutch body to generate loud or harsh collision noise under the influence of the residual magnetic flux.

Further, the present invention has provided an electromagnetic clutch designed to operate for changing over the power transmission mechanism between the coupled state and the uncoupled state for thereby enabling and disabling transmission of the motive power between the engine and the rotating electric machine through the medium of the power transmission mechanism, wherein the control apparatus includes the excitation attenuating means for applying alternately the voltages of positive and negative polarities to the field coil of the electromagnetic clutch while decreasing gradually time periods during which the voltages are applied, when the coupled state is changed over to the uncoupled state. Owing to the arrangement that the voltages of positive and negative polarities are alternately applied to the field coil of the electromagnetic clutch while reducing the applying period upon changing over of the power transmission mechanism from the coupled state to the uncoupled state, the curve representing demagnetization in the field core portions of the electromagnetic clutch body and the electromagnetic clutch follower member is substantially such as illustrated in Fig. 3. It can be seen that the residual magnetic flux approach to zero. Thus, it is possible to solve the problem that the electromagnetic clutch follower member remains contacted to the electromagnetic clutch body or the electromagnetic clutch follower member becomes difficult to detach completely from the electromagnetic clutch body with the electromagnetic clutch follower member being inclined to strike against the electromagnetic clutch body to thereby generate loud or harsh collision noise under the influence of the residual magnetic flux.

Further, the field coil of the electromagnetic clutch is constituted by a plurality of field coils, wherein the field current of a same direction is caused to flow through any one of the plural field coils while the other field coil is supplied with the field current alternately in one and in the other direction opposite direction. With the arrangement that the field coil of the electromagnetic clutch is constituted by a plurality of field coils, i.e., the first field coil and the second field coil or alternatively three or more field coils, wherein the field current of a same direction is caused to flow constantly through any one of the plurality of field coils while the field current is caused to flow through the other field coil(s) alternately in one direction and the other direction opposite to the one direction, the curve representing demagnetization in the field core portions of the electromagnetic clutch body and the electromagnetic clutch follower member is substantially such as illustrated in Fig. 6, when the coupled state is changed over to the uncoupled state. It can be seen that the residual magnetic flux approaches to zero. Thus, it is possible to solve the problem that the electromagnetic clutch follower member remains contacted to the electromagnetic clutch body or the electromagnetic clutch follower member becomes difficult to detach completely from the electromagnetic clutch body with the electromagnetic clutch follower member being inclined to strike against the electromagnetic clutch body to thereby generate loud collision noise under the influence of the residual magnetic flux. Besides, when the uncoupled state is changed over to the coupled state, the excitation intensity of the field coil of the electromagnetic clutch is increased stepwise or continuously. Consequently, the electromagnetic clutch moves progressively to the electromagnetic clutch body and thus collision energy upon final coupling is reduced, as a result of which generation of coupling noise can significantly be suppressed.

Furthermore, the pulse-width modulating circuit can be employed as the excitation attenuating means. Owing to this feature, the excitation intensity is gradually decreased through the pulse width modulation, whereby the excitation intensity can positively be decreased without fail, and thus the enhanced reliability can be ensured.

Moreover, the first and second Zener diodes can be connected across the field coil of the electromagnetic clutch in parallel therewith, wherein the first and second Zener diodes are connected in series with polarities opposite to each other. Owing to this feature, surge voltages of plus and minus polarities induced in the field coil under the counter electromotive force upon turn-off of the transistors A and B or the transistors C and D can be suppressed by the first and second Zener diodes, whereby the transistors A, B, C and D can be protected against the surge voltages and hence from destruction by means of the first and second Zener diodes.

Further, the excitation attenuating means can be so arranged as to decrease the field current to a prescribed current or alternatively diminish the excitation intensity to a prescribed value in the course of lapse of a predetermined time after the electromagnetic clutch follower member and the electromagnetic clutch body of the electromagnetic clutch have been coupled to each other. Owing to this feature, it is possible to decrease the field current or alternatively diminish the excitation intensity after coupling of the electromagnetic clutch follower member and the electromagnetic clutch body of the electromagnetic clutch because the air gap in the magnetic circuit defined between the electromagnetic clutch follower member and the electromagnetic clutch body approaches to zero. Thus, efficiency brought about by the reduction of the field current can be increased.

Further, the electromagnetic clutch can be used in combination with the rotating electric machine for the motor vehicle and for transmitting bidirectionally the motive power between the engine of a motor vehicle and the rotating electric machine through the medium of the power transmission mechanism, the rotating electric machine operating as an electric motor for starting engine operation and as an electric generator for supplying the electric power to the motor vehicle. In this case, the electromagnetic clutch is implemented in combination with the rotor secured to the rotor shaft disposed internally of the bracket, the planetary gear mechanism including the sun gear secured to the rotor shaft at an end portion thereof, the planetary gear meshing with the sun gear, the cylindrical member having the internal gear formed in the inner wall surface thereof and meshing with the planetary gear, and the carrier for supporting rotatably the planetary gear by means of the planetary gear shaft extending axially through the planetary gear at the center portion thereof, and the one-way clutch disposed on the inner side of the carrier for transmitting the turning force from the power transmission mechanism to the rotor shaft by way of the sun gear, wherein the electromagnetic clutch is composed of the electromagnetic clutch body secured to the bracket and the electromagnetic clutch follower member disposed in opposition to the electromagnetic clutch body movably to and away from the electromagnetic clutch body. In the electric motor operation mode, the electromagnetic clutch follower member is brought into contact with the electromagnetic clutch body and engages with the cylindrical member to thereby brake the cylindrical member, as a result of which the internal gear acts as the stationary element so that the turning force of the rotor is transmitted to the power transmission mechanism by way of the rotor shaft, the sun gear, the planetary gear and the carrier, while in the generator operation mode, the electromagnetic clutch follower member is moved away from the electromagnetic clutch body, as a result of which the turning force from the power transmission mechanism causes the carrier, the one-way clutch, the sun gear and the rotor shaft to rotate to thereby rotate the rotor.

Thus, in the electromagnetic clutch designed for use in combination with the rotating electric machine for the motor vehicle and capable of transmitting bidirectionally the motive power between the engine and the rotating electric machine for the motor vehicle through the medium of the power transmission mechanism and operating as the generator to supply an electric power to the motor vehicle upon starting of the engine while operating the electric motor for supplying the electric power to the motor vehicle, it is possible to solve the problem that the electromagnetic clutch follower member remains contacted to the electromagnetic clutch body or the electromagnetic clutch body becomes difficult to detach completely from the latter with the electromagnetic clutch follower member being inclined to strike against the electromagnetic clutch body to generate loud or harsh collision noise under the influence of the residual magnetic flux.

## Claims

1. An electromagnetic clutch (110) designed to operate to change over a power transmission mechanism between a coupled state and an uncoupled state for thereby enabling and disabling transmission of a motive power between an engine and a rotating electric machine through the medium of said power transmission mechanism, the electromagnetic clutch comprising a control apparatus for controlling said clutch
**characterized in that** said control apparatus comprises
excitation attenuating means (120, 130) which are configured such that when the coupled state is changed over to the uncoupled state, the intensity of excitation of a field coil (71) of said electromagnetic clutch (110) is gradually reduced while said excitation is alternately switched from one to the other polarity, such that a counter electromotive force is induced in the field coil (71),
wherein the field coil (71) of said electromagnetic clutch (110) includes a plurality of field coils (71, 71a),
wherein a field current of a same direction is caused to flow through any one (71a) of said plurality of field coils (71, 71a) while the other field coil (71) is supplied with the field current alternately in one direction and in the other direction opposite to said one direction.

2. An electromagnetic clutch (110) as set forth in claim 1,
**characterized in that** said
excitation attenuating means (120, 130) are capable of applying voltages of positive and negative polarities alternately to the field coil (71a) of said electromagnetic clutch (110) while decreasing gradually time periods during which said voltages are applied, when the coupled state is changed over to the uncoupled state.

3. An electromagnetic clutch set forth in claim 1 or 2,
**characterized in that** a pulse-width modulating circuit (132) is employed as said excitation attenuating means.

4. An electromagnetic clutch set forth in claim 1 or 2,
**characterized in that** first and second Zener diodes (90, 91) are connected across the field coil (71) of said electromagnetic clutch (110) in parallel therewith, and that said first and second Zener diodes (90, 91) are connected in series with polarities opposite to each other.

5. An electromagnetic clutch set forth in claim 1 or 2,
**characterized in that** said excitation attenuating means (120, 130) is so arranged as to decrease the field current (Iao) to a prescribed current or alternatively diminish the excitation intensity to a prescribed value in the course of elapse of a predetermined time after an electromagnetic clutch follower member (73) and an electromagnetic clutch body (70) of said electromagnetic clutch (110) have been coupled to each other.

6. A rotating electric machine (100, 12) for a motor vehicle having an electromagnetic clutch (110) which is capable of transmitting bidirectionally a motive power between an engine of the motor vehicle and said rotating electric machine through the medium of a power transmission mechanism, said rotating electric machine operating as an electric motor for starting engine operation and as an electric generator for supplying an electric power to the motor vehicle, and comprises in combination
a rotor (100) secured to a rotor shaft (12) disposed internally of a bracket (80),
the planetary gear mechanism (111) including a sun gear (20) secured to said rotor shaft (12) at an end portion thereof, a planetary gear (30) meshing with said sun gear (20), a cylindrical member (40) having an internal gear (41) formed in an inner wall surface thereof and meshing with said planetary gear (30), and a carrier (61) for supporting rotatably said planetary gear (30) by means of a planetary gear shaft (65) extending axially through said planetary gear (30) at a center portion thereof, and
a one-way clutch (113) disposed on an inner side of said carrier (61) for transmitting a turning force from said power transmission mechanism to the rotor shaft (12) by way of the sun gear (20),
the electromagnetic clutch (110) including an electromagnetic clutch body (70) secured to said bracket (80, 81) and an electromagnetic clutch follower member (73) disposed in opposition to the electromagnetic clutch body (70) movably to and away from the electromagnetic clutch (110), **characterized in that** the electromagnetic clutch is as set forth in claim 1, wherein in the electric motor operation mode, said electromagnetic clutch follower member (73) is brought into contact with said electromagnetic clutch body (70) and engages said cylindrical member (40) to thereby brake said cylindrical member (40), as a result of which said internal gear (41) acts as a stationary element such that the turning force of said rotor (100) is transmitted to said power transmission mechanism by way of said rotor shaft (12), said sun gear (20), said planetary gear (30) and said carrier (61), and
wherein in the generator operation mode, said electromagnetic clutch follower member (73) is moved away from said electromagnetic clutch body (70), as a result of which the turning force from said power transmission mechanism causes said carrier (61), said one-way clutch (113), said sun gear (20) and said rotor shaft (12) to rotate to thereby rotate said rotor (100).

## Patentansprüche

1. Elektromagnetische Kupplung (110), die dafür ausgestaltet ist, einen Leistungsübertragungsmechanismus zwischen einem gekoppelten Zustand und einem ungekoppelten Zustand zu verändern, um dadurch eine Übertragung einer Antriebskraft zwischen einem Motor und einer elektrischen Drehungsmaschine durch das Medium des Leistungsübertragungsmechanismus zu ermöglichen und zu deaktivieren, wobei die elektromagnetische Kupplung eine Steuerungsvorrichtung zum Steuern der Kupplung aufweist,
**dadurch gekennzeichnet, dass** die Steuerungsvorrichtung aufweist:
Erregungsabschwächmittel (120, 130), die so konfiguriert sind, dass, wenn der gekoppelte Zustand zu dem ungekoppelten Zustand verändert wird, die Erregungsintensität einer Feldspule (17) der elektromagnetischen Kupplung (110) allmählich verringert wird, während die Erregung abwechselnd von der einen zu der anderen Polarität geschaltet wird, sodass eine elektromagnetische Gegenkraft in der Feldspule (71) induziert wird,
wobei die Feldspule (71) der elektromagnetischen Kupplung (110) mehrere Feldspulen (71, 71a) aufweist,
wobei ein Feldstrom einer gleichen Richtung durch eine beliebige (71a) der mehreren Feldspulen (71, 71a) zu fließen gebracht wird während die andere Feldspule (71) mit dem Feldstrom abwechselnd in einer Richtung und in der anderen Richtung entgegengesetzt zu der einen Richtung versorgt wird.

2. Elektromagnetische Kupplung (110) nach Anspruch 1,
**dadurch gekennzeichnet, dass**
die Erregungsabschwächmittel (120, 130) in der Lage sind, Spannungen von positiven und negativen Polaritäten abwechselnd an die Feldspule (71a) der elektromagnetischen Kupplung (110) anzulegen, während sie allmählich die Zeitperioden verringern, während derer die Spannungen angelegt werden, wenn der gekoppelte Zustand zu dem ungekoppelten Zustand verändert wird.

3. Elektromagnetische Kupplung nach Anspruch 1 oder 2,
**dadurch gekennzeichnet, dass** ein Pulsweitenmodulierungsschaltkreis (132) als Erregungsabschwächmittel verwendet wird.

4. Elektromagnetische Kupplung nach Anspruch 1 oder 2,
**dadurch gekennzeichnet, dass** erste und zweite Zenerdioden (90, 91) über die Feldspule (71) der elektromagnetischen Kupplung (110) parallel dazu verbunden sind und dass die ersten und zweiten Zenerdioden (90, 91) in Reihe geschaltet sind, mit Polaritäten entgegengesetzt zueinander.

5. Elektromagnetische Kupplung nach Anspruch 1 oder 2,
**dadurch gekennzeichnet, dass** das Erregungsabschwächmittel (120, 130) so angeordnet ist, dass es den Feldstrom (Iao) auf einen vorher festgelegten Storm verringert oder alternativ die Erregungsintensität auf einen vorher festgelegten Wert im Verlauf des Ablaufs einer voreingestellten Zeit, nachdem ein elektromagnetisches Kupplungsfolgeelement (73) und ein elektromagnetischer Kupplungskörper (70) der elektromagnetischen Kupplung (110) miteinander gekoppelt wurden, vermindert.

6. Elektrische Drehungsmaschine (100, 12) für ein angetriebenes Fahrzeug mit einer elektromagnetischen Kupplung (110), die in der Lage ist, bidirektional eine Antriebsleistung zwischen einem Antrieb des angetriebenen Fahrzeugs und der elektrischen Drehungsmaschine durch das Medium eines Leistungsübertragungsmechanismus zu übertragen, wobei die elektrische Drehungsmaschine als Elektromotor zum Starten des Antriebsbetriebs und als Stromgenerator zum Zuführen einer elektrischen Leistung zu dem angetrieben Fahrzeug betrieben wird, und welche Kombination aufweist:
einen Rotor (100), der mit einer Rotorwelle (12) fest verbunden ist, die in einer Klammer (80) vorgesehen ist,
einen Planetengetriebemechanismus (111) mit einem Sonnenrad (20), das mit der Rotorwelle (12) an einem Endabschnitt von dieser fest befestigt ist, einem Planetenrad (30), das mit dem Sonnenrad (20) kämmt, einem zylindrischen Element (40), das ein inneres Ritzel (41) aufweist, das in einer inneren Wandoberfläche von diesem ausgebildet ist, das mit dem Planetenrad (30) kämmt, und einem Träger (61) zum drehbaren Abstützen des Planetenrads (30) über eine Planetenradwelle (65), die sich axial durch das Planetenrad (30) an einem Mittelabschnitt von diesem erstreckt, und
eine Einwegkupplung (113), die an einer inneren Seite des Trägers (61) zum Übertragen einer Umdrehkraft von dem Leistungsübertragungsmechanismus zu der Rotorwelle (12) über das Sonnenrad (20) vorgesehen ist,
wobei die elektromagnetische Kupplung (110) einen elektromagnetischen Kupplungskörper (70), der an der Klammer (80, 81) fest befestigt ist, und ein elektromagnetisches Kupplungsfolgeelement (73) aufweist, das gegenüber dem elektromagnetischen Kupplungskörper (70) von und zu der elektromagnetischen Kupplung (110) bewegbar vorgesehen ist,
**dadurch gekennzeichnet, dass** die elektromagnetische Kupplung gemäß Anspruch 1 ist,
wobei in dem Elektromotor-Betriebsmodus das elektromagnetische Kupplungsfolgeelement (73) in Kontakt mit dem elektromagnetischen Kupplungskörper (70) gebracht wird und das zylindrische Element (40) in Eingriff tritt, um dadurch das zylindrische Element (40) zu bremsen, wobei als ein Ergebnis davon das innere Ritzel (41) als ein stationäres Element so wirkt, dass die Umdrehkraft des Rotors (100) auf den Leistungsübertragungsmechanismus über die Rotorwelle (12), das Sonnenrad (20), das Planetenrad (30) und den Träger (61) übertragen wird und
wobei in dem Generator-Betriebsmodus das elektromagnetische Kupplungsfolgeelement (73) weg von dem elektromagnetischen Kupplungskörper (70) bewegt wird, als ein Ergebnis wovon die Umdrehkraft von dem Leistungsübertragungsmechanismus den Träger (61), die Einwegkupplung (113), das Sonnenrad (20) und die Rotorwelle (12) zum Drehen bringt, um dadurch den Rotor (100) zu drehen.

## Revendications

1. Embrayage électromagnétique (110) conçu pour fonctionner pour commuter un mécanisme de transmission de puissance entre un état couplé et un état non couplé pour, de ce fait, activer et désactiver la transmission d'une puissance motrice entre un moteur et une machine électrique tournante au moyen dudit mécanisme de transmission de puissance, l'embrayage électromagnétique comprenant un appareil de commande pour commander ledit embrayage,
**caractérisé en ce que** ledit appareil de commande comprend :
des moyens d'atténuation d'excitation (120, 130) qui sont configurés de sorte que, lorsque l'état couplé est commuté vers l'état non couplé, l'intensité d'excitation d'une bobine d'induction (71) dudit embrayage électromagnétique (110) est réduite graduellement tandis que ladite excitation est commutée alternativement d'une polarité à l'autre, de sorte qu'une force contre-électromotrice soit induite dans la bobine d'induction (71),
dans lequel la bobine d'induction (71) dudit embrayage électromagnétique (110) comprend une pluralité de bobines d'induction (71, 71a),
dans lequel un courant d'induction d'une même direction est amené à circuler à travers l'une quelconque (71a) de ladite pluralité de bobines d'induction (71, 71a), tandis que l'autre bobine d'induction (71) reçoit le courant d'induction alternativement dans une direction et dans l'autre direction opposée à ladite une direction.

2. Embrayage électromagnétique (110) selon la revendication 1,
**caractérisé en ce que** lesdits moyens d'atténuation d'excitation (120, 130) sont capables d'appliquer des tensions de polarités positive et négative alternativement à la bobine d'induction (71a) dudit embrayage électromagnétique (110), tout en diminuant graduellement les périodes de temps pendant lesquelles lesdites tensions sont appliquées, lorsque l'état couplé est commuté vers l'état non couplé.

3. Embrayage électromagnétique selon la revendication 1 ou 2,
**caractérisé en ce qu'**un circuit de modulation de durée d'impulsion (132) est utilisé en tant que dits moyens d'atténuation d'excitation.

4. Embrayage électromagnétique selon la revendication 1 ou 2,
**caractérisé en ce que** des première et deuxième diodes Zener (90, 91) sont connectées aux bornes de la bobine d'induction (71) dudit embrayage électromagnétique (110) en parallèle avec celle-ci, et **en ce que** lesdites première et deuxième diodes Zener (90, 91) sont connectées en série avec des polarités opposées l'une à l'autre.

5. Embrayage électromagnétique selon la revendication 1 ou 2,
**caractérisé en ce que** lesdits moyens d'atténuation d'excitation (120, 130) sont agencés de manière à diminuer le courant d'induction (Iao) à un courant prescrit ou alternativement diminuer l'intensité d'excitation à une valeur prescrite alors qu'un temps prédéterminé s'écoule après qu'un élément suiveur d'embrayage électromagnétique (73) et un corps d'embrayage électromagnétique (70) dudit embrayage électromagnétique (110) ont été couplés l'un à l'autre.

6. Machine électrique tournante (100, 12) pour un véhicule à moteur comportant un embrayage électromagnétique (110) qui est capable de transmettre une puissance motrice de manière bidirectionnelle entre un moteur du véhicule à moteur et ladite machine électrique tournante au moyen d'un mécanisme de transmission de puissance, ladite machine électrique tournante fonctionnant en tant que moteur électrique pour lancer le fonctionnement du moteur et en tant que génératrice électrique pour fournir une puissance électrique au véhicule à moteur, et
comprend en combinaison
un rotor (100) fixé à un arbre de rotor (12) disposé à l'intérieur d'un support (80),
le mécanisme d'engrenage planétaire (111) comprenant un planétaire (20) fixé audit arbre de rotor (12) au niveau d'une partie d'extrémité de celui-ci, un engrenage planétaire (30) engrenant avec ledit planétaire (20), un élément cylindrique (40) ayant un engrenage interne (41) formé dans une surface de paroi interne de celui-ci et engrenant avec ledit engrenage planétaire (30), et un porte-satellites (61) pour supporter en rotation ledit engrenage planétaire (30) au moyen d'un arbre d'engrenage planétaire (65) s'étendant axialement à travers ledit engrenage planétaire (30) au niveau d'une partie centrale de celui-ci, et
un embrayage unidirectionnel (113) disposé sur un côté interne dudit porte-satellites (61) pour transmettre une force de rotation dudit mécanisme de transmission de puissance à l'arbre de rotor (12) au moyen du planétaire (20),
l'embrayage électromagnétique (110) comprenant un corps d'embrayage électromagnétique (70) fixé audit support (80, 81) et un élément suiveur d'embrayage électromagnétique (73) disposé en opposition avec le corps d'embrayage électromagnétique (70) de manière mobile vers et à l'opposé de l'embrayage électromagnétique (110),
**caractérisée en ce que** l'embrayage électromagnétique est tel que défini dans la revendication 1,
dans laquelle, dans le mode de fonctionnement de moteur électrique, ledit élément suiveur d'embrayage électromagnétique (73) est amené en contact avec ledit corps d'embrayage électromagnétique (70) et vient en prise avec ledit élément cylindrique (40) pour, de ce fait, freiner ledit élément cylindrique (40), en conséquence de quoi ledit engrenage interne (41) agit en tant qu'élément fixe de sorte que la force de rotation dudit rotor (100) est transmise audit mécanisme de transmission de puissance au moyen dudit arbre de rotor (12), dudit planétaire (20), dudit engrenage planétaire (30) et dudit porte-satellites (61), et
dans laquelle, dans le mode de fonctionnement de génératrice, ledit élément suiveur d'embrayage électromagnétique (73) est éloigné dudit corps d'embrayage électromagnétique (70), en conséquence de quoi la force de rotation dudit mécanisme de transmission de puissance amène ledit porte-satellites (61), ledit embrayage unidirectionnel (113), ledit planétaire (20) et ledit arbre de rotor (12) à tourner pour, de ce fait, faire tourner ledit rotor (100).
